# EUROPEAN PATENT SPECIFICATION

(11) **EP 2 960 077 B1**
(45) Date of publication and mention of the grant of the patent: **04.01.2017**
(21) Application number: 14753461.4
(22) Date of filing: 13.02.2014
(51) Int. Cl.: B60C 5/01, B29D 30/60, B60C 9/02, B60C 9/28, B60C 3/00, B60C 9/18

(54) **TIRE**
REIFEN
PNEU

(30) Priority: 20.02.2013 JP 2013031450
(43) Date of publication of application: 30.12.2015
(73) Proprietor: Bridgestone Corporation, Tokyo 104-8340 (JP)
(72) Inventor: HASEGAWA, Keiichi, Tokyo 104-8340 (JP); KON, Seiji, Tokyo 104-8340 (JP); KOUNO, Yoshihide, Tokyo 104-8340 (JP)
(74) Representative: Oxley, Robin John George
(86) International application number: PCT/JP2014/053357
(87) International publication number: WO 2014/129380

(56) References cited:
- EP-A1- 0 098 459
- EP-A1- 2 399 761
- JP-A- S5 413 106
- JP-A- S5 920 702
- JP-A- H03 148 302
- JP-A- 2012 046 019

## Description

### Technical Field

The present invention relates to a tire, in particular a tire with a tire frame member formed using a resin material.

### Background Art

Hitherto, tires formed with rubber, organic fiber material, and steel members are known. From the perspective of reducing weight and facilitating recycling, there is recently demand to use thermoplastic polymer materials, such as thermoplastic elastomers (TPE) and thermoplastic resins, in tire frame members. For example, Patent Document 1 describes forming a tire frame member by covering a bead core with a thermoplastic elastomer, and disposing a reinforcement layer at the outer periphery of the tire frame member. The tire reinforcement layer is formed by a reinforcement cord using metal fibers, such as steel fibers, disposed at an orientation with respect to the tire circumferential direction of close to 0 degrees.

### Related Documents

### Related Patent Documents

Patent Document 1: Japanese Patent Application Laid-Open (JP-A) No. H03-143701 Reference is also made to JP 2012-046019, which discloses a tire according to the preamble of claim 1, and to EP-A-0098459 and EP-A-2399761.

### SUMMARY OF INVENTION

### Technical Problem

However, even in tires using a resin material in the tire frame member, there is a need for further improvements from the perspective of saving resources.

In the light of the above circumstances, an object of the present invention is to achieve a weight reduction while securing strength to counter internal pressure in a tire with the tire frame member employing a resin material.

### Solution to Problem

A first aspect of the present invention is a tire including: a tire frame member formed from a thermoplastic resin material, and provided with side sections positioned at each tire width direction side, and a crown section that is connected to tire radial direction outer side end portions of the side sections and that extends toward a tire width direction inner side; a reinforcement layer that is provided at an outer peripheral side of the crown section, and that includes a cord wound in a spiral along a tire circumferential direction; and a thinned portion that is provided at a tire width direction central portion of the crown section, within the width of the reinforcement layer and over a narrower range than the width of the crown section, wherein a range of the thinned portion from the tire equatorial plane to a tire width direction outer side is 1/3 of the total width of the reinforcement layer, or less.

This tire enables a reduction in weight of the tire to be achieved while securing the strength of the tire to counter internal pressure due to providing the thinned portion in the crown section of the tire frame member within the width of the reinforcement layer and over a range narrower than the width of the crown section.

When the range of the thinned portion from the tire equatorial plane to the tire width direction outer side is more than 1/3 of the total width of the reinforcement layer, the thinned portion is positioned in the region of the reinforcement layer where tension increases when internal pressure is imparted, making it difficult to secure sufficient strength in the tire to counter internal pressure.

According to this tire, the range of the thinned portion is appropriately set, and so sufficient strength can be secured in the tire to counter internal pressure.

A second aspect of the present invention is the tire according to the first aspect, wherein a boundary in the crown section between the thinned portion and a general portion other than the thinned portion has a stepped profile.

This tire enables the weight of the tire to be reduced by a further decrease in volume of the tire frame member due to the boundary between the thinned portion and the general portion being formed with a step shaped profile.

A third aspect of the present invention is the tire according to the second aspect, wherein the boundary is provided at at least one of an inner face side or the outer face side of the crown section.

This tire enables a flat outer face side of the crown section in cases in which the boundary is provided at the inner face side of the crown section, and enables a flat inner face side of the crown section in cases in which the boundary is provided at the outer face side of the crown section.

A fourth aspect of the present invention is the tire according to the first aspect, wherein a thickness of the thinned portion gradually decreases on progression toward a tire equatorial plane.

Due to the thickness of the thinned portion decreasing gradually toward the tire equatorial plane in this tire, there is a gradual change in strength in the crown section between the thinned portion and the general portion other than the thinned portion, thereby suppressing stress concentration, and enabling durability to be raised.

### Advantageous Effects

As explained above, the tire according to the first aspect exhibits the excellent advantageous effect of enabling a reduction in weight to be achieved, while securing sufficient strength to counter internal pressure.

The tire according to the first aspect also exhibits the excellent advantageous effect of enabling sufficient strength to be secured in the tire to counter internal pressure.

The tire according to the second aspect exhibits the excellent advantageous effect of further reducing the volume of the tire frame member, and enabling a reduction in weight of the tire to be achieved.

The tire according to the third aspect exhibits the excellent advantageous effect of making the inner face side or the outer face side of the crown section flat, and enabling a reduction in weight to be achieved without an increase in man hours.

The tire according to the fourth aspect exhibits the excellent advantageous effect of suppressing stress concentration, and enabling durability to be raised.

### BRIEF DESCRIPTION OF DRAWINGS

Fig. 1 is a half cross-section illustrating a tire according to the first exemplary embodiment in a cross-section taken along the tire axial direction.
Fig. 2 is a graph illustrating a tension distribution in a reinforcement layer when internal pressure is being imparted, and a cross-section illustrating a tire in a tire axial direction cross-section.
Fig. 3 is a half cross-section illustrating a tire according to the second exemplary embodiment in a tire axial direction cross-section.

### DESCRIPTION OF EMBODIMENTS

Explanation follows regarding embodiments to implement the present invention, with reference to the drawings.

### First Exemplary Embodiment

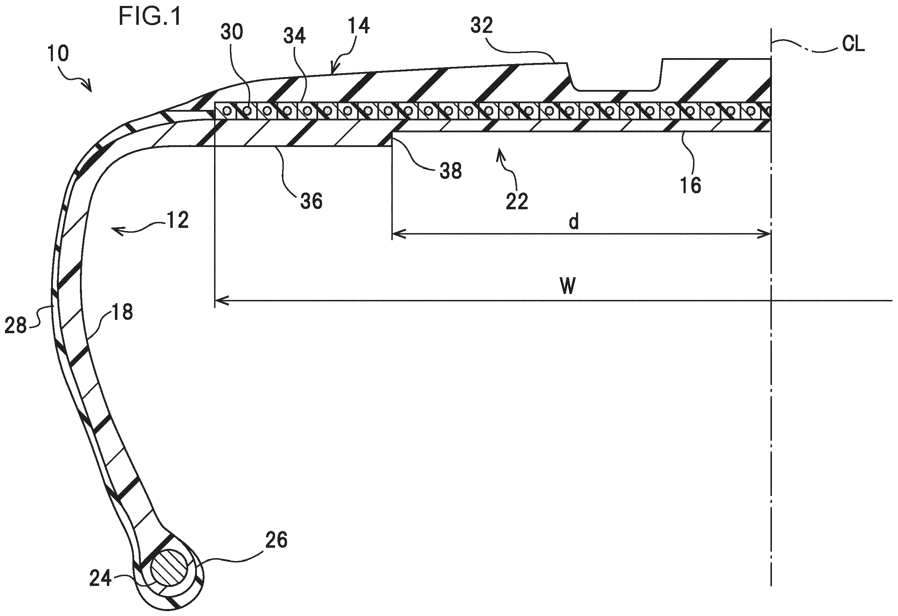

Fig. 1 illustrates a tire 10 according to the present exemplary embodiment, such as a pneumatic tire, including a tire frame member 12, a reinforcement layer 14, and a thinned portion 16.

The tire frame member 12 is formed from a resin material. The tire frame member 12 is provided with side sections 18 at positions at each tire width direction side, and a crown section 22 that is connected to tire radial direction outer side end portions of the side sections 18 and that extends toward a tire width direction inner side.

The tire frame member 12 is a ring shape centered on the tire axial direction. Resin material for configuring the tire frame member 12 are thermoplastic resins (including thermoplastic elastomers)These resin materials do not include vulcanized rubber.

Thermoplastic resins (including thermoplastic elastomers) are polymer compounds of materials that soften and flow with increased temperature, and that adopt a relatively rigid and strong state when cooled. In the present specification, out of these, distinction is made between polymer compounds forming materials that soften and flow with increasing temperature, that adopt a relatively hard and strong state on cooling, and that have a rubber-like elasticity, considered to be thermoplastic elastomers, and polymer compounds forming materials that soften and flow with increasing temperature, that adopt a relatively hard and strong state on cooling, and do not have a rubber-like elasticity, considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic resin materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break (JIS K7113), also as defined by JIS K7113, of 50% or greater. Materials with a Vicat softening temperature, as defined in JIS K7206 (method A), of 130°C may be employed.

As resin materials, in addition to the above thermoplastic resins (including thermoplastic elastomers), general purpose resins may also be employed, such as thermoset resins, (meth)acrylic-based resins, EVA resins, vinyl chloride resins, fluororesins, and silicone-based resins.

The side sections 18 are connected to the tire radial direction outer sides of a pair of bead portions 24. Circular ring shaped bead cores 26 are embedded in the respective pair of bead portions 24. Each of the bead cores 26 is wound a bead cord plural turns in a circular ring shape, or by taking a cable cord configured from plural strands of twisted bead cord and forming it into a circular ring shape.

Steel cord configured by twisting together plural strands of steel filaments may be employed as the bead core. The outer face of the filaments may treated by plating, such as by zinc plating, copper plating, or brass plating. Cords made from other metals may also be employed as the bead core.

The bead portions 24, the outer face of the side sections 18, and the outer face of the tire width direction end portions of the crown section 22 are covered by a covering layer 28. Rubber, for example, may be employed as the covering layer 28.

A rubber having better sealing ability to that of resin material of the tire frame member 12 may, for example, be employed for portions of the covering layer 28 covering the bead portions 24, and in particular portions that make contact with a rim (not illustrated in the drawings). This rubber is preferably the same type of rubber to the rubber employed for the bead portion outer face in conventional rubber-made pneumatic tires. The covering layer 28 of the bead portions 24 may be omitted as long as the sealing ability is secured between the resin material configuring the tire frame member 12 and the rim. Another type of resin material with better sealing ability to that of the resin material configuring the tire frame member 12 may be employed as the material of the covering layer 28.

The reinforcement layer 14 includes a cord 30 that is provided at the outer peripheral side of the crown section 22, and is wound in a spiral shape along a tire circumferential direction. The reinforcement layer 14 is equivalent to the belt layer disposed at the tire radial direction outer side of a carcass ply in conventional rubber-made pneumatic tires.

The cord 30 of the reinforcement layer 14 pre-covered by a cord covering layer 34 formed from a resin material. The same type, or a different type, of resin material to that configuring the tire frame member 12 may be employed for this resin material. Excellent adhesion to the tire frame member 12 is achieved by employing the same type of resin material to that configuring the tire frame member 12 as the material of the cord covering layer 34.

A tread member 32 configuring a tread, which is the ground contact portion of the tire 10, is disposed at the tire radial direction outer side of the crown section 22 and the reinforcement layer 14. The tread member 32 is, for example, a pre-cured tread (PCT) configured by using rubber. The tread member 32 is configured from a rubber with more excellent wear resistance properties to those of the resin material forming the tire frame member 12. The same type of tread rubber to that employed in conventional rubber-made pneumatic tires may be employed as this rubber, for example, styrene butadiene rubber (SBR), may be employed. Another type of resin material having more excellent wear resistance properties to those of the resin material forming the tire frame member 12 may also be employed for the tread member 32.

The crown section 22 is a region where the tread member is disposed at the tire radial direction outer side thereof. The reinforcement layer 14 is a reinforcement layer formed from steel cords.

The thinned portion 16 is provided at a tire width direction central portion of the crown section 22, within the width of the reinforcement layer 14 and over a narrower range than the width of the crown section 22, and is configured thinner than a general portion 36 of the crown section 22. The range of the thinned portion 16 from a tire equatorial plane CL to a tire width direction outer side is 1/3 of the total width of the reinforcement layer 14, or less. In other words d ≤ W/3, wherein W is the total width of the reinforcement layer 14 in the tire width direction, and d is the tire width direction distance from the tire equatorial plane CL to a boundary 38 between the thinned portion 16 and the general portion 36.

When the range of the thinned portion 16 from the tire equatorial plane CL to the tire width direction outer side is greater than 1/3 of the total width of the reinforcement layer 14, i.e. d > W/3, then the thinned portion 16 is positioned in a region of the reinforcement layer 14 where there is an increase in tension when internal pressure is being imparted, and it becomes difficult to secure sufficient strength in the tire to counter internal pressure.

The total width W of the reinforcement layer 14 is a tire width direction separation distance between the two tire width direction end portions of the cord covering layer 34 at both sides in the tire width direction. In cases in which the cord 30 of the reinforcement layer 14 is not covered by a cord covering layer 34, this is the separation distance between the cord 30 positioned at each side in the tire width direction furthermost to the outer side in the tire width direction.

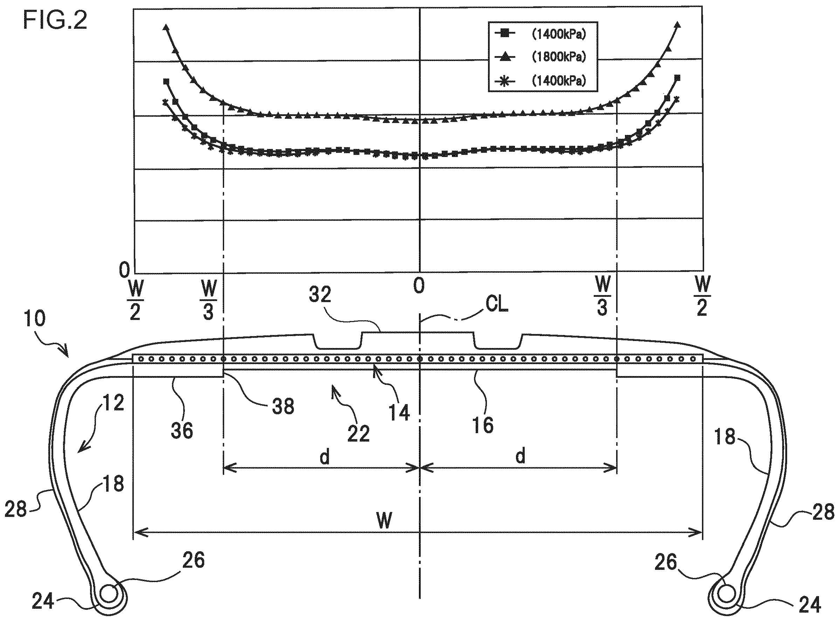

The graph at the upper portion of Fig. 2 illustrates a distribution of tension in the tire circumferential direction arising in the reinforcement layer 14 when internal pressure is being imparted to a tire having a uniform thickness of the crown section 22 (not illustrated in the drawings). The horizontal axis indicates tire width direction separation distances from an origin of the position of the tire equatorial plane CL, with the maximum values being at half the total width W of the reinforcement layer 14, i.e. equivalent to W/2. The vertical axis indicates tension. The three lines (with annotation symbols of triangles, squares, and asterisks), each indicate different respective resin materials configuring the tire frame member 12. The tire internal pressure for the resin materials indicated by the squares and asterisks is 1400 kPa, and the tire internal pressure for the resin material indicated by the triangles is 1800 kPa.

It is apparent from this graph that, irrespective of the different resin materials and internal pressures, the tension arising in the reinforcement layer 14 is comparatively small at both sides of the tire equatorial plane CL up to the respective W/3 positions, and then increases on passing the W/3 position. It is thus apparent from this that there is surplus capacity in the reinforcement layer 14 to bear more tension on both sides of the tire equatorial plane CL, up to the respective positions of W/3. The present exemplary embodiment has noticed this fact, and sets the thinned portion 16 in the above range of the crown section 22, as illustrated in the lower portion of Fig. 2. This thereby enables sufficient strength of the tire 10 to be secured to counter internal pressure.

As illustrated in Fig. 1, the outer face side of the crown section 22 is formed flat as it spans from the thinned portion 16 to the general portion 36 other than the thinned portion 16. The boundary 38 in the crown section 22 between the thinned portion 16 and the general portion 36 is, however, formed with a step shaped profile. The boundary 38 is provided at at least one of the inner face side or the outer face side of the crown section 22. In the example illustrated in Fig. 1, the boundary 38 is provided only on the inner face side of the crown section 22. The boundary 38 may be provided on the outer face side of the crown section 22 alone, or may be provided on both the outer face side and the inner face side.

The shape of the boundary 38 is not limited thereto, and may be sloped toward the tire width direction outer side on progression toward the tire radial direction inner side. The outline of the inner face of the crown section 22 may also be a continuous curve from the general portion 36 to the thinned portion 16. In such cases, the boundary 38 between the thinned portion 16 and the general portion 36, namely, the range of the thinned portion 16, is identified by the position where the thickness of the thinned portion 16 starts to increase on progression toward the general portion 36.

Locally, the thickness of the thinned portion 16 in the tire radial direction may increase or decrease, or be zero. Namely, it is sufficient for there to be a volume reduction at the thinned portion 16 compared to cases in which the thickness of the crown section 22 is uniform. The thickness of the thinned portion 16 may also be 0 overall. In other words, the crown section 22 is not necessarily present in a part region including the tire equatorial plane CL.

### Operation

Explanation follows regarding operation of the present exemplary embodiment configured as described above. As illustrated in Fig. 1 and Fig. 2, the tire 10 according to the present exemplary embodiment enables the weight of the tire 10 to be reduced by providing the thinned portion 16 in the crown section 22 of the tire frame member 12. The boundary 38 between the thinned portion 16 in the crown section 22 and the general portion 36 is formed with a stepped profile, and so the volume of the tire frame member 12 is decreased in volume further, enabling a weight reduction in the tire 10.

Portions of the tire frame member 12 that bear tension on their own when internal pressure is imparted are mainly the side sections 18. In the crown section 22 of the tire frame member 12, where the reinforcement layer 14 is disposed, tension is mainly born by the reinforcement layer 14. Thus even when the thinned portion 16 is provided in the crown section 22 within the width of the reinforcement layer 14 and over a narrower range than the width of the crown section 22, namely at portions covered by the reinforcement layer 14, there is little effect on the strength of the tire 10.

Thus the present exemplary embodiment enables a reduction in weight to be achieved, while securing strength to counter internal pressure, in the tire 10 employing resin material in the tire frame member 12.

Moreover, in cases in which there is no carcass ply disposed at the tire width direction central portion of a crown section 22 of a tire 10, referred to as rubber tires with a centerless carcass construction (not illustrated in the drawings), tension tends to be non-uniform in the tire circumferential direction due to cords of the carcass ply being disposed at a separation from each other in the tire circumferential direction.

In regard to this point, in the tire 10 according to the present exemplary embodiment, the tire frame member 12 is made from a resin material, and so non-uniform tension in the tire circumferential direction is not liable to occur. Thus the tire 10 according to the present exemplary embodiment is different from rubber tires with a conventional centerless carcass construction.

### Second Exemplary Embodiment

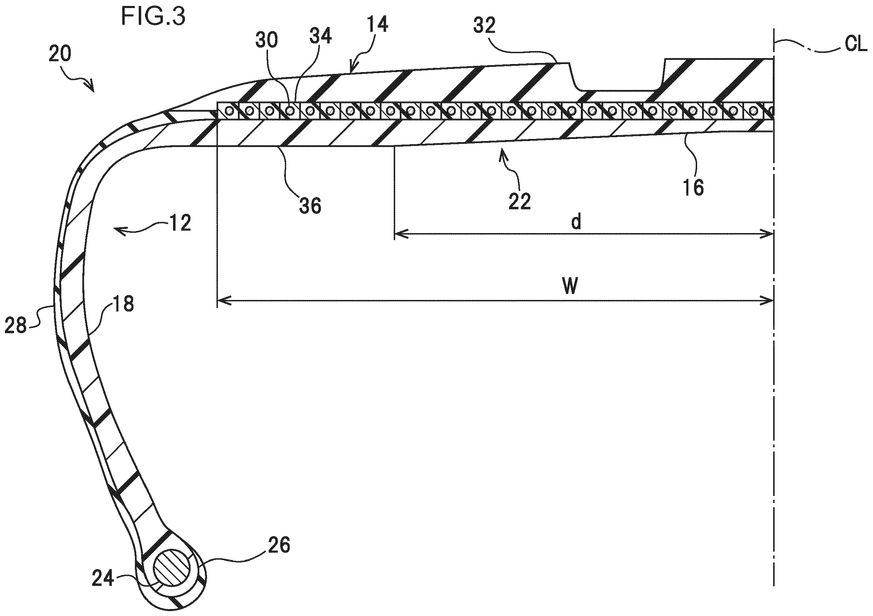

As illustrated in Fig. 3, in a tire 20 according to the present exemplary embodiment, the thickness of the thinned portion 16 at the crown section 22 of the tire frame member 12 gradually decreases toward the tire equatorial plane CL. The position from the tire equatorial plane CL of a boundary 38 between a thinned portion 16 and a general portion 36, namely the range of the thinned portion 16, is identified by the position where the thickness of the general portion 36 starts to decrease on progression toward the thinned portion 16.

The change in the thinned portion 16 is continuous, however there is no limitation thereto, and may be step-wise. It is sufficient for there to be a volume reduction at the thinned portion 16 compared to cases in which the thickness of the crown section 22 is a uniform thickness of the general portion 36, and there may be locations at portions of the thinned portion 16 where the thickness reverts to increasing. Moreover, the thickness of the thinned portion 16 may become zero prior to reaching the tire equatorial plane CL.

Other portions are similar to the first exemplary embodiment, and so the same reference numerals are appended to the same portions in the drawings, and explanation thereof is omitted.

### Operation

Explanation follows regarding operation of the present exemplary embodiment configured as described above. As illustrated in Fig. 3, in the tire 20 according to the present exemplary embodiment, the thickness of the thinned portion 16 decreases on progression toward the tire equatorial plane CL, and so there is a gradual change in the strength between the thinned portion 16 of the crown section 22, and the general portion 36 other than the thinned portion 16. This thereby enables a concentration of stress to be suppressed, and enables the durability to be raised.

### Other Exemplary Embodiments

In the above exemplary embodiments the range of the thinned portion 16 from the tire equatorial plane CL to the tire width direction outer side is 1/3 of the total width W of the reinforcement layer 14 or less, however there is no limitation thereto, and the range may exceed 1/3 of the total width W.

The entire content of Japanese Patent Application No. 2013-31450 filed on the 20th of February 2013 is incorporated by reference in the present specification.

### Explanation of Reference Numerals

- 10: tire
- 12: tire frame member
- 14: reinforcement layer
- 16: thinned portion
- 18: side sections
- 20: tire
- 22: crown section
- 24: bead portions
- 30: cord
- 36: general portion
- 38: boundary
- CL: tire equatorial plane
- W: total width of reinforcement layer

## Claims

1. A tire (10), comprising:
a tire frame member (12) formed from a thermoplastic resin material, and provided with side sections (18) positioned at each tire width direction side, and a crown section (22) that is connected to tire radial direction outer side end portions of the side sections (18) and that extends toward a tire width direction inner side; and
a reinforcement layer (14) that is provided at an outer peripheral side of the crown section (22), and that includes a cord (30) wound in a spiral along a tire circumferential direction; and
a thinned portion (16) that is provided at a tire width direction central portion of the crown section (22), within the width of the reinforcement layer (14) and over a narrower range than the width of the crown section (22), **characterized in that**
a range of the thinned portion (16) from the tire equatorial plane (CL) to a tire width direction outer side is 1/3 of the total width (W) of the reinforcement layer (14), or less.

2. The tire (10) of claim 1, wherein a boundary (38) in the crown section (22) between the thinned portion (16) and a general portion (36) other than the thinned portion (16) has a stepped profile.

3. The tire (10) of claim 2, wherein the boundary (38) is provided at at least one of an inner face side or the outer face side of the crown section (22).

4. The tire (10) of claim 1, wherein a thickness of the thinned portion (16) gradually decreases toward a tire equatorial plane (CL).

## Patentansprüche

1. Reifen (10), umfassend:
ein Reifen-Rahmenelement (12), gefertigt aus einem thermoplastischen Harzmaterial, versehen mit Seitenabschnitten (18), die an jeder Seite in Reifenbreitenrichtung angeordnet sind, und einem Kronenabschnitt (22), der mit den in Reifenumfangsrichtung außen liegenden Endabschnitten der Seitenabschnitte (18) verbunden ist und der sich zu einer Innenseite in Reifenbreitenrichtung hin erstreckt; und
eine Verstärkungsschicht (14), die an einer äußeren umlaufenden Seite des Kronenabschnitts (22) verläuft und die einen Kord (30) enthält, der spiralförmig entlang einer Reifenradialrichtung gewunden ist; und
einen verjüngten Abschnitt (16), der an einem in Reifenbreitenrichtung mittleren Abschnitt des Kronenabschnitts (22) vorhanden ist, innerhalb der Breite der Verstärkungsschicht (14) und über einen schmaleren Bereich als die Breite des Kronenabschnitts (22), **dadurch gekennzeichnet, dass**
ein Bereich des verjüngten Abschnitts (16) von der äquatorialen Ebene (CL) des Reifens zu einer in Reifenbreitenrichtung außen liegenden Seite 1/3 der gesamten Breite (W) der Verstärkungsschicht (14) beträgt oder weniger.

2. Reifen (10) nach Anspruch 1, bei dem eine Grenze (38) im Kronenabschnitt (22) zwischen dem verjüngten Abschnitt (16) und einem allgemeinen Abschnitt (36), der nicht der verjüngte Abschnitt (16) ist, ein stufiges Profil aufweist.

3. Reifen (10) nach Anspruch 2, bei dem die Grenze (38) an mindestens einer von einer Innenflächenseite oder der Außenflächenseite des Kronenabschnitts (22) vorhanden ist.

4. Reifen (10) nach Anspruch 1, bei dem die Dicke des verjüngten Abschnitts (16) allmählich in Richtung einer äquatorialen Ebene (CL) des Reifens abnimmt.

## Revendications

1. Pneu (10), comprenant :
un membre de châssis de pneu (12) fabriqué à partir d'un matériau de résine thermoplastique et doté de sections latérales (18) positionnées de chaque côté dans le sens de la largeur du pneu, et une section de couronne (22), reliée aux portions d'extrémité extérieures des sections latérales (18) dans le sens radial du pneu, et qui s'étend vers un côté intérieur dans le sens de la largeur du pneu; et
une couche de renforcement (14) disposée sur un côté périphérique extérieur de la section de couronne (22), et qui comporte un câble (30) enroulé en spirale selon une direction circonférentielle du pneu ; et
une portion amincie (16) présente dans une portion centrale de la section de couronne (22) dans le sens de la largeur du pneu, à l'intérieur de la largeur de la couche de renforcement (14) et sur une zone plus étroite que la largeur de la section de couronne (22), **caractérisée en ce que**
une zone de la portion amincie (16), depuis le plan équatorial du pneu (CL) jusqu'à un côté extérieur dans le sens de la largeur du pneu, est égal à 1/3 de la largeur totale (W) de la couche de renforcement (14), ou inférieur.

2. Pneu (10) selon la revendication 1, dans lequel une limite (38) dans la section de couronne (22) entre la portion amincie (16) et une portion générale (36), différente de la portion amincie (16), possède un profil en gradins.

3. Pneu (10) selon la revendication 2, dans lequel la limite (38) existe sur au moins l'un parmi un côté de face intérieure ou le côté de face extérieure de la section de couronne (22).

4. Pneu (10) selon la revendication 1, dans lequel une épaisseur de la portion amincie (16) diminue graduellement en direction d'un plan équatorial du pneu (CL).
